# EUROPÄISCHE PATENTSCHRIFT

(11) **EP 2 655 929 B1**
(45) Veröffentlichungstag und Bekanntmachung des Hinweises auf die Patenterteilung: **05.08.2015**
(21) Anmeldenummer: 11784681.6
(22) Anmeldetag: 21.11.2011
(51) Int. Cl.: F16H 3/44, F16H 3/66

(54) **MEHRSTUFENGETRIEBE IN PLANETENBAUWEISE**
MULTI-STAGE GEARBOX OF PLANETARY CONSTRUCTION
BOÎTE DE VITESSES MULTIÉTAGÉE À TRAINS PLANÉTAIRES

(30) Priorität: 20.12.2010 DE 102010063496
(43) Veröffentlichungstag der Anmeldung: 30.10.2013
(73) Patentinhaber: ZF Friedrichshafen AG, 88038 Friedrichshafen (DE)
(72) Erfinder: FELLMANN, Martin, 88045 Friedrichshafen (DE); BECK, Stefan, 88097 Eriskirch (DE); GUMPOLTSBERGER, Gerhard, 88048 Friedrichshafen (DE)
(86) Internationale Anmeldenummer: PCT/EP2011/070514
(87) Internationale Veröffentlichungsnummer: WO 2012/084370

(56) Entgegenhaltungen:
- JP-A- 11 166 598
- US-A1- 2005 113 206
- US-A1- 2005 176 551

## Beschreibung

Die Erfindung betrifft ein Mehrstufengetriebe in Planetenbauweise, insbesondere Splittergetriebe einer Arbeitsmaschine, mit einem Gehäuse, in welchem drei Planetensätze und mehrere Wellen aufgenommen sind, und mit Schaltelementen, welche durch zumindest eine Bremse und Kupplungen gebildet sind und mittels deren gezielter Betätigung verschiedene Übersetzungsverhältnisse zwischen einer Antriebs- und einer Abtriebswelle darstellbar sind.

Ein derartiges Mehrstufengetriebe kommt vorzugsweise als Splittergetriebe bei Arbeitsmaschinen zum Einsatz, wobei darstellbare Gänge des Splittergetriebes durch eine gezielte Betätigung von Schaltelementen und einen hierbei innerhalb von Planetensätzen jeweils wirksamen Leistungsfluss definiert werden. Mit "Splittergetriebe" wird hierbei üblicherweise eine Getriebeeinheit bezeichnet, mit welcher mehrere Übersetzungsverhältnisse mit geringen Stufensprüngen darstellbar sind. Bei einem Gesamtgetriebe einer landwirtschaftlichen Arbeitsmaschine, wie beispielsweise einem Traktor, wird ein derartiges Splittergetriebe als Lastschaltgetriebe üblicherweise mit einem weiteren mehrgängigen Getriebe in Form eines Gruppengetriebes mit hohen Stufensprüngen kombiniert, so dass durch diese Kombination ein Gesamtgetriebe mit einer hohe Anzahl an darstellbaren Fahrstufen bei gleichzeitig hoher Spreizung erreichbar ist. Häufig kommen hierbei weitere Getriebeeinheiten in Form einer Kriechgang- und/oder einer Wendeeinheit hinzu.

Aus der EP 0495942 B1 ist ein Mehrstufengetriebe in Planetenbauweise bekannt, welches als Splittergetriebe einer landwirtschaftlichen Arbeitsmaschine mit einem Gruppengetriebe kombiniert wird. Dabei weist dieses Mehrstufengetriebe ein Gehäuse auf, in welchem drei Planetensätze und mehrere Wellen angeordnet sind, von denen eine die Antriebswelle und eine andere die Abtriebswelle des Mehrstufengetriebes darstellt. Des Weiteren sind im Bereich der Wellen mehrere Schaltelemente vorgesehen, mittels deren gezielter Betätigung der Leistungsfluss innerhalb der drei Planetensätze variiert und damit verschiedene Übersetzungsverhältnisse zwischen der Antriebs- und der Abtriebswelle definierbar sind. Insgesamt sind hierdurch sechs Übersetzungsverhältnisse darstellbar.

Weitere Mehrstufengetriebe sind beispielsweise aus der US2005/176551 A1 bekannt.

J Es ist die Aufgabe der vorliegenden Erfindung, ein Mehrstufengetriebe der eingangs genannten Art vorzuschlagen, durch welches eine hohe Anzahl an Übersetzungsverhältnissen mit einer geringen Bauteilanzahl und damit bei einem niedrigen Gewicht und geringem Herstellungsaufwand realisierbar ist. Ferner sollte sich eine nahezu geometrische Übersetzungsreihe darstellen lassen, sowie die Belastungen der einzelnen Getriebeelemente reduziert sein. Zudem sollen kleine und nahezu geometrische Stufensprünge zwischen den einzelnen Übersetzungsverhältnissen, sowie eine kompakte Bauweise möglich sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere drehbare Wellen und drei Planetensätze aufnimmt. Die Planetensätze sind dabei bevorzugt in axialer Richtung betrachtet in der Reihenfolge erster Planetensatz, zweiter Planetensatz und dritter Planetensatz angeordnet und bevorzugt jeweils als Minusplanetensatz ausgebildet. Es ist jedoch ebenso denkbar, an Stellen, wo es die Bindbarkeit zulässt, einzelne oder mehrere der Minusplanetensätze in Plusplanetensätze umzuwandeln, wenn gleichzeitig eine Steg- und eine Hohlradanbindung getauscht und der Betrag der Standübersetzung um Eins erhöht wird. Zudem ist auch eine anderweitige Anordnung der Planetensätze in axialer Richtung als die oben beschriebene im Rahmen der Erfindung denkbar.

Bekanntlich umfasst ein einfacher Minusplanetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plusplanetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Gemäß der Erfindung verbindet eine dritte Welle ein Hohlrad eines ersten Planetensatzes mit einem Hohlrad eines zweiten Planetensatzes und kann über eine erste Kupplung mit der Abtriebswelle gekoppelt werden. Des Weiteren ist eine vierte Welle mit einem Sonnenrad des ersten Planetensatzes gekoppelt und zum Einen mittels einer ersten Bremse am Gehäuse festsetzbar und kann zum Anderen über eine zweite Kupplung mit einer fünften Welle verbunden werden. Diese fünfte Welle wiederum ist mit einem Sonnenrad des zweiten Planetensatzes verbunden und mittels einer dritten Kupplung mit einer sechsten Welle koppelbar, welche mit einem Steg des ersten Planetensatzes in Verbindung steht. Schließlich ist die Antriebswelle mit einem Steg des zweiten Planetensatzes verbunden.

Bevorzugt dient die Antriebswelle als Antrieb des Mehrstufengetriebes, d.h. zum Einleiten eines Drehmoments in das Mehrstufengetriebe. Sie ist daher insbesondere von einem Antriebsmotor, beispielsweise einem Verbrennungs- oder Elektromotor, antreibbar. Die Abtriebswelle dient dementsprechend bevorzugt als Abtrieb des Mehrstufengetriebes, d.h. zum Abgriff eines Drehmoments von dem Mehrstufengetriebe, insbesondere zum Betreiben eines Aggregats, beispielsweise einer Pumpe oder eines elektrischen Generators, oder eines Fahrzeugantriebs, beispielsweise eines Fahrzeugrads oder einer Fahrzeuggleiskette.

In Weiterbildung der Erfindung ist die sechste Welle zudem mit einem Hohlrad eines dritten Planetensatzes verbunden und ein Sonnenrad des dritten Planetensatzes drehfest mit dem Gehäuse gekoppelt. Zudem steht die Abtriebswelle mit einem Steg des dritten Planetensatzes in Verbindung.

In diesem Fall ergibt sich ein erstes Übersetzungsverhältnis durch Schließen der ersten Bremse und der dritten Kupplung, wohingegen ein zweites Übersetzungsverhältnis durch Betätigen der ersten Bremse und der zweiten Kupplung geschaltet wird. Ein weiteres, drittes Übersetzungsverhältnis ist durch Schließen der zweiten und dritten Kupplung wählbar. Ferner ergibt sich ein viertes Übersetzungsverhältnis durch Betätigen der ersten und zweiten Kupplung, wohingegen ein letztes, fünftes Übersetzungsverhältnis durch Schließen der ersten und dritten Kupplung geschaltet wird. Durch die erfindungsgemäße Ausgestaltung eines Mehrstufengetriebes lassen sich somit insgesamt fünf Übersetzungsverhältnisse realisieren.

Gemäß einer alternativen Ausführungsform der Erfindung ist ein Hohlrad eines dritten Planetensatzes mit der sechsten Welle und ein Sonnenrad des dritten Planetensatzes mit einer siebten Welle verbunden, welche mittels einer zweiten Bremse am Gehäuse festsetzbar ist. Zudem steht die Abtriebswelle mit einem Steg des dritten Planetensatzes in Verbindung.

In diesem Fall ergibt sich ein erstes Übersetzungsverhältnis durch Schließen beider Bremsen, sowie der dritten Kupplung, wohingegen ein daran anschließendes, zweites Übersetzungsverhältnis durch Betätigen beider Bremsen, sowie der zweiten Kupplung geschaltet wird. Ein drittes Übersetzungsverhältnis ist durch Schließen der zweiten Bremse, sowie der zweiten und dritten Kupplung wählbar. Des Weiteren ergibt sich ein viertes Übersetzungsverhältnis durch Betätigen der zweiten Bremse, sowie der ersten und zweiten Kupplung, wohingegen ein weiteres, fünftes Übersetzungsverhältnis durch Schließen der zweiten Bremse, sowie der ersten und dritten Kupplung geschaltet wird. Zudem ist ein sechstes Übersetzungsverhältnis durch Betätigen der ersten Bremse, sowie der ersten und dritten Kupplung, und ein siebtes Übersetzungsverhältnis durch Schließen der ersten Bremse sowie der ersten und zweiten Kupplung wählbar. Folglich lässt sich durch diese Ausführungsform der Erfindung ein Mehrstufengetriebe mit insgesamt sieben Übersetzungsverhältnissen realisieren.

In Weiterbildung der Erfindung ergibt sich ein zusätzliches Übersetzungsverhältnis durch Schließen der ersten, zweiten und dritten Kupplung. Dementsprechend kann das vorgenannte Mehrstufengetriebe mit sieben Übersetzungsverhältnissen auf ein Getriebe mit insgesamt acht Übersetzungsverhältnissen ausgedehnt werden.

Entsprechend einer alternativen Ausgestaltung der Erfindung ist die sechste Welle zudem mit einem Hohlrad eines dritten Planetensatzes verbunden und kann über eine vierte Kupplung mit der Antriebswelle gekoppelt werden. Ferner ist eine siebte Welle mit einem Sonnenrad des dritten Planetensatzes verbunden und mittels einer zweiten Bremse am Gehäuse festsetzbar. Schließlich steht die Abtriebswelle zusätzlich auch mit einem Steg des dritten Planetensatzes in Verbindung.

In Weiterbildung dieser Ausgestaltung ist der erste Planetensatz in axialer Richtung zwischen dem zweiten und dem dritten Planetensatz platziert. Vorteilhafterweise wird durch diese Anordnung im Vergleich zu der vorhergehenden Variante eine deutlich kompaktere Bauweise erzielt, welche für eine Front-Querbauweise mit seitlich zum Antrieb liegendem Abtrieb geeignet ist.

In beiden vorgenannten Fällen ergibt sich ein erstes Übersetzungsverhältnis durch Schließen beider Bremsen, sowie der dritten Kupplung, wohingegen ein zweites Übersetzungsverhältnis durch Betätigen beider Bremsen, sowie der zweiten Kupplung geschaltet wird. Ein weiteres drittes Übersetzungsverhältnis ist durch Schließen der zweiten Bremse, sowie der zweiten und dritten Kupplung wählbar. Alternativ ergibt sich das dritte Übersetzungsverhältnis durch Betätigen der zweiten Bremse, sowie der dritten und vierten Kupplung oder durch Schließen der zweiten Bremse, sowie der ersten und vierten Kupplung oder aber auch durch Betätigen der zweiten Bremse, sowie der zweiten und vierten Kupplung. Ein weiteres, viertes Übersetzungsverhältnis wird durch Schließen der zweiten Bremse, sowie der ersten und zweiten Kupplung, ein fünftes Übersetzungsverhältnis durch Betätigen der zweiten Bremse, sowie der ersten und dritten Kupplung geschaltet. Ferner ergibt sich ein sechstes Übersetzungsverhältnis durch Schließen der ersten Bremse, sowie der ersten und dritten Kupplung, wohingegen ein siebtes Übersetzungsverhältnis durch Betätigen der ersten Bremse, sowie der ersten und zweiten Kupplung geschaltet wird. Schließlich ist ein achtes Übersetzungsverhältnis durch Schließen der ersten Bremse, sowie der ersten und vierten Kupplung wählbar. Folglich lassen sich durch die beiden erfindungsgemäßen Ausgestaltungen eines Mehrstufengetriebes acht Übersetzungsverhältnisse realisieren.

Entsprechend einer weiteren, alternativen Ausgestaltung eines Mehrstufengetriebes kann die sechste Welle zum Einen mittels einer vierten Kupplung mit der Antriebswelle und zum Anderen über eine fünfte Kupplung mit einer siebten Welle lösbar verbunden werden, wobei die siebte Welle mit einem Hohlrad eines dritten Planetensatzes gekoppelt ist. Ein Sonnenrad des dritten Planetensatzes ist drehfest mit dem Gehäuse verbunden, wohingegen ein Steg des dritten Planetensatzes mit der Abtriebswelle gekoppelt ist.

Weiter alternativ ist die sechste Welle zudem mit einem Hohlrad eines dritten Planetensatzes verbunden und kann über eine vierte Kupplung mit der Antriebswelle gekoppelt werden. Ferner ist ein Sonnenrad des dritten Planetensatzes drehfest mit dem Gehäuse und ein Steg des dritten Planetensatzes mit einer siebten Welle verbunden, die mittels einer fünften Kupplung mit der Abtriebswelle koppelbar ist.

Bei den beiden vorgenannten Alternativen ergibt sich ein erstes Übersetzungsverhältnis durch Schließen der ersten Bremse, sowie der dritten und fünften Kupplung, wohingegen ein zweites Übersetzungsverhältnis durch Betätigen der ersten Bremse, sowie der zweiten und fünften Kupplung geschaltet wird. Ein weiteres, drittes Übersetzungsverhältnis ist durch Schließen der zweiten, dritten und fünften Kupplung wählbar. Alternativ hierzu ergibt sich das dritte Übersetzungsverhältnis auch durch Betätigen der dritten, vierten und fünften Kupplung oder durch Schließen der ersten, vierten und fünften Kupplung oder durch Betätigen der zweiten, vierten und fünften Kupplung. Des Weiteren wird ein viertes Übersetzungsverhältnis durch Schließen der ersten, zweiten und fünften Kupplung und ein fünftes Übersetzungsverhältnis durch Betätigen der ersten, dritten und fünften Kupplung geschaltet. Hingegen ist ein sechstes Übersetzungsverhältnis durch Schließen der ersten Bremse, sowie der ersten und dritten Kupplung wählbar. Schließlich wird ein siebtes Übersetzungsverhältnis durch Betätigen der ersten Bremse, sowie der ersten und zweiten Kupplung geschaltet, wobei sich ein achtes Übersetzungsverhältnis durch Schließen der ersten Bremse, sowie der ersten und vierten Kupplung ergibt. Auch im Falle der beiden vorgenannten Ausgestaltungen wird somit jeweils ein Mehrstufengetriebe mit acht Übersetzungsverhältnissen verwirklicht.

In Weiterbildung der Erfindung ergibt sich ein zusätzliches Übersetzungsverhältnis durch Schließen der ersten, zweiten und dritten Kupplung oder durch Betätigen der ersten, zweiten und vierten Kupplung oder durch Schließen der ersten, dritten und vierten Kupplung. Hierdurch können die erfindungsgemäßen Ausgestaltungen eines Mehrstufengetriebes mit acht Übersetzungsverhältnissen auf ein Getriebe mit insgesamt neun Gängen erweitert werden.

In Weiterbildung der Erfindung ist die Antriebswelle des Mehrstufengetriebes zur Realisierung eines Nebenabtriebs insbesondere durch das Mehrstufengetriebe hindurchgeführt und dient dabei neben der Abtriebswelle als zusätzlicher zweiter Abtrieb, beispielsweise im Sinne eines Zapfwellenabtriebs für austauschbare Nebenaggregate.

Grundsätzlich umfasst die Erfindung auch Ausführungen des Mehrstufengetriebes, bei denen Antrieb und Abtrieb kinematisch gegeneinander vertauscht sind. Hierbei dient die genannte Abtriebswelle des Mehrstufengetriebes als dessen Antrieb, d.h. zum Einleiten eines Drehmoments in das Mehrstufengetriebe, beispielsweise mittels eines Antriebsmotors, und die genannte Antriebswelle des Mehrstufengetriebes dient als dessen Abtrieb, d.h. zum Abgriff eines Drehmoments von dem Mehrstufengetriebe, beispielsweise zum Betreiben eines Aggregats oder Fahrzeugantriebs. In einem Schaltschema des Mehrstufengetriebes kehrt sich die Reihenfolge der Übersetzungsverhältnisse dann entsprechend um.

Mittels der einzelnen erfindungsgemäßen Ausgestaltungen eines Mehrstufengetriebes ist es möglich, die jeweiligen Übersetzungsverhältnisse mit einer niedrigen Anzahl an Bauteilen zu realisieren und somit den Herstellungsaufwand und das Gewicht gering zu halten. Zudem ergeben sich hierbei eine insbesondere für ein Splittergetriebe einer Arbeitsmaschine geeignete nahezu geometrische Übersetzungsreihe, sowie jeweils kleine Stufensprünge, welche ebenfalls nahezu geometrisch ausgestaltet sind.

Ferner zeichnen sich die einzelnen Ausgestaltungen des erfindungsgemäßen Mehrstufengetriebes durch niedrige Absolut- und Relativdrehzahlen, sowie niedrige Planetensatz- und Schaltelementmomente aus, was sich auf deren Dimensionierung und deren Lebensdauer positiv auswirkt. Insgesamt lassen sich zudem gute Verzahnungswirkungsgrade sowie eine kompakte Bauweise erreichen.

Die Erfindung ist nicht auf die angegebene Kombination der Merkmale des Hauptanspruchs und der abhängigen Ansprüche beschränkt. Es ergeben sich darüberhinaus Möglichkeiten, einzelne Merkmale, auch soweit sie aus den Ansprüchen, der nachfolgenden Beschreibung der Ausführungsbeispiele oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

Weitere, die Erfindung verbessernde Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: ein beispielhaftes Schaltschema für ein Mehrstufengetriebe gemäß Fig. 3;
- Fig. 5: eine schematische Ansicht einer dritten bevorzugten Ausführungsform eines erfindungsgemäßen Mehrstufengetriebes;
- Fig. 6: ein beispielhaftes Schaltschema für ein Mehrstufengetriebe gemäß Fig. 5;
- Fig. 7: eine schematische Ansicht einer weiteren, vierten bevorzugten Ausführungsform eines erfindungsgemäßen Mehrstufengetriebes;
- Fig. 8: eine schematische Ansicht einer fünften bevorzugten Ausführungsform eines erfindungsgemäßen Mehrstufengetriebe; und
- Fig. 9: eine schematische Ansicht einer weiteren, sechsten bevorzugten Ausführungsform eines erfindungsgemäßen Mehrstufengetriebes.

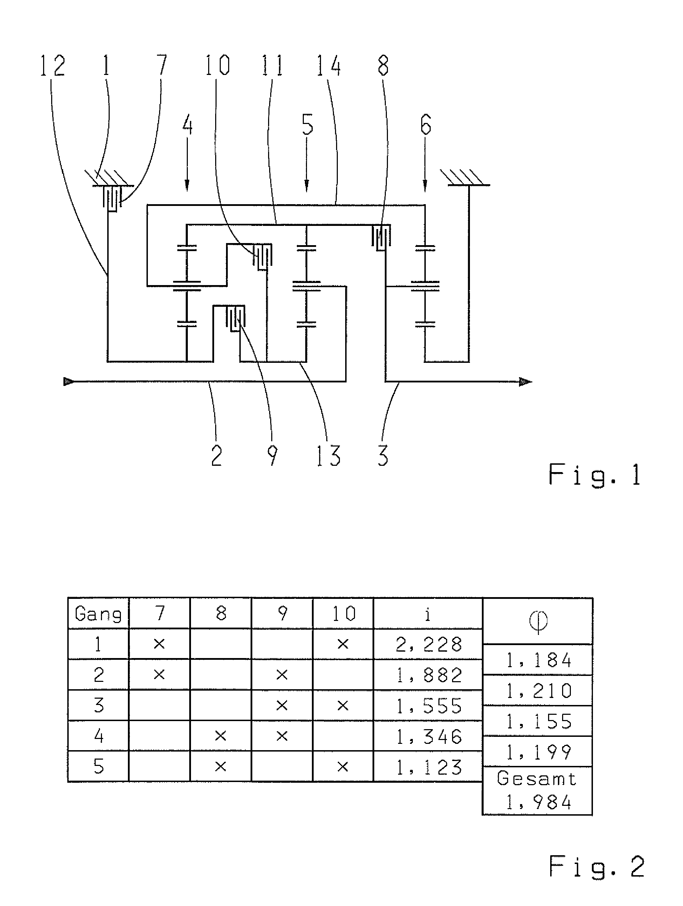

Aus Fig. 1 geht eine erste bevorzugte Ausführungsform eines erfindungsgemäßen Mehrstufengetriebes hervor, bei welchem es sich bevorzugt um ein Splittergetriebe eines Gesamtgetriebes einer Arbeitsmaschine handelt. Innerhalb des Gesamtgetriebes wird ein derartiges Splittergetriebe hierbei als Lastschaltgetriebe üblicherweise in Kombination mit einem Gruppengetriebe verwendet, so dass durch das Splittergetriebe mit niedrigen Stufensprüngen in Kombination mit dem Gruppengetriebe mit hohen Stufensprüngen eine sehr hohe Anzahl an darstellbaren Übersetzungsverhältnissen und eine große erreichbare Spreizung des Gesamtgetriebes möglich ist. Aufgrund dieser hohen Anzahl an darstellbaren Gängen eignet sich ein hierdurch gebildetes Gesamtgetriebe gut für die Anwendung bei einer landwirtschaftlichen Arbeitsmaschine. Des Weiteren erfolgt hierbei auch bevorzugt eine Kombination mit einer Kriechgang- und/oder einer Wendeeinheit. Dabei ist eine geometrische Reihenfolge der einzelnen Getriebeeinheiten im Gesamtgetriebe prinzipiell frei wählbar.

Wie nun aus Fig. 1 ersichtlich ist, weist das erfindungsgemäße Mehrstufengetriebe ein Gehäuse 1 auf, in welchem eine Antriebswelle 2, eine Abtriebswelle 3, sowie drei Planetensätze 4, 5 und 6 aufgenommen sind. Bei der dargestellten Ausführung sind die Planetensätze 4, 5 und 6 jeweils als Minusplanetensätze ausgebildet, wobei es erfindungsgemäß aber ebenso gut denkbar ist, zumindest einen der Minusplanetensätze als Plusplanetensatz auszuführen. Hierzu muss lediglich gleichzeitig eine Steg- und eine Hohlradanbindung getauscht und der Betrag der Standübersetzung im Vergleich zu der Ausführung als Minusplanetensatz um Eins erhöht werden. Ferner sind die Planetensätze 4, 5 und 6 vorliegend axial betrachtet in der Reihenfolge 4, 5, 6 angeordnet.

Wie ferner aus Fig. 1 hervorgeht, umfasst das erfindungsgemäße Mehrstufengetriebe insgesamt vier Schaltelemente, welche sich aus einer Bremse 7 und drei Kupplungen 8, 9 und 10 zusammensetzen. Eine räumliche Anordnung dieser Schaltelemente kann dabei beliebig sein und wird nur durch deren Abmessungen, sowie die äußere Formgebung begrenzt. Im vorliegenden Fall sind die Bremse 7 und die Kupplungen 8, 9 und 10 jeweils als Lamellenschaltelemente ausgeführt, wobei erfindungsgemäß aber ebenso gut auch eine Ausführung als formschlüssige Schaltelemente oder anderweitige reibschlüssige Reibelemente denkbar ist.

Durch eine gezielte Betätigung der Schaltelemente ist ein selektives Schalten verschiedener Übersetzungsverhältnisse, vorliegend von insgesamt fünf Gängen, zwischen der Antriebswelle 2 und der Abtriebswelle 3 möglich. Des Weiteren sind in dem Gehäuse 1 insgesamt sechs drehbare Wellen aufgenommen, welche neben der Antriebswelle 2 und der Abtriebswelle 3 durch eine dritte Welle 11, eine vierte Welle 12, eine fünfte Welle 13 und eine sechste Welle 14 gebildet sind.

Erfindungsgemäß verbindet die dritte Welle 11 ein Hohlrad des ersten Planetensatzes 4 mit einem Hohlrad des zweiten Planetensatzes 5 und kann über die erste Kupplung 8 mit der Abtriebswelle 3 gekoppelt werden. Die Abtriebswelle 3 ist hierbei zudem mit einem Steg des dritten Planetensatzes 6 verbunden. Des Weiteren ist die vierte Welle 12 mit einem Sonnenrad des ersten Planetensatzes 4 gekoppelt und kann über die Bremse 7 am Gehäuse 1 festgesetzt werden, wobei zudem über die zweite Kupplung 9 eine Koppelung mit der fünften Welle 13 möglich ist.

Die fünfte Welle 13 wiederum ist mit einem Sonnenrad des zweiten Planetensatzes 5 verbunden und kann über die dritte Kupplung 10 mit der sechsten Welle 14 gekoppelt werden, welche zudem einen Steg des ersten Planetensatzes 4 mit einem Hohlrad des dritten Planetensatzes 6 verbindet. Schließlich ist die Antriebswelle 2 noch mit einem Steg des zweiten Planetensatzes 5 gekoppelt und ein Sonnenrad des dritten Planetensatzes 6 drehfest mit dem Gehäuse 1 verbunden.

Aus Fig. 2 geht ein beispielhaftes Schaltschema eines Mehrstufengetriebes gemäß Fig. 1 hervor, wobei hierbei jedes der insgesamt fünf Übersetzungsverhältnisse durch Schließen von zweien der vier Schaltelemente darstellbar ist und zum Schalten in den jeweils benachbarten Gang der Zustand zweier Schaltelemente zu variieren ist. Dabei können aus dem beispielhaften Schaltschema die jeweiligen Übersetzungen i in den einzelnen Gangstufen, sowie die sich ergebenden Gangsprünge ϕ zum jeweils nächsthöheren Gang beispielhaft entnommen werden. Prinzipiell ist die Höhe der einzelnen Übersetzungen über die Höhe der Standübersetzungen der Planetensätze 4, 5 und 6 frei wählbar, wobei bevorzugt der erste Planetensatz 4 eine Standübersetzung von -1,800, der zweite Planetensatz 5 eine Standübersetzung von -3,500 und der dritte Planetensatz 6 eine Standübersetzung von -1,800 aufweisen. Aus Fig. 2 ist zudem eine Spreizung des Getriebes von insgesamt 1,984 ersichtlich.

Wie aus Fig. 2 hervorgeht, ergibt sich ein erstes Übersetzungsverhältnis durch Schließen der Bremse 7 und der dritten Kupplung 10, wobei zum Schalten in das nächste, zweite Übersetzungsverhältnis die dritte Kupplung 10 zu öffnen und die zweite Kupplung 9 zu betätigen ist. Ein sich an das zweite Übersetzungsverhältnis anschließendes drittes Übersetzungsverhältnis wird durch Öffnen der Bremse 7 und Schließen der dritten Kupplung 10 gewählt. Ausgehend vom dritten Übersetzungsverhältnis ergibt sich ein viertes Übersetzungsverhältnis durch Öffnen der dritten Kupplung 10 und Schließen der ersten Kupplung 8. Schließlich ergibt sich ein fünftes Übersetzungsverhältnis, indem ausgehend vom vierten Übersetzungsverhältnis die zweite Kupplung 9 geöffnet und die dritte Kupplung 10 betätigt wird.

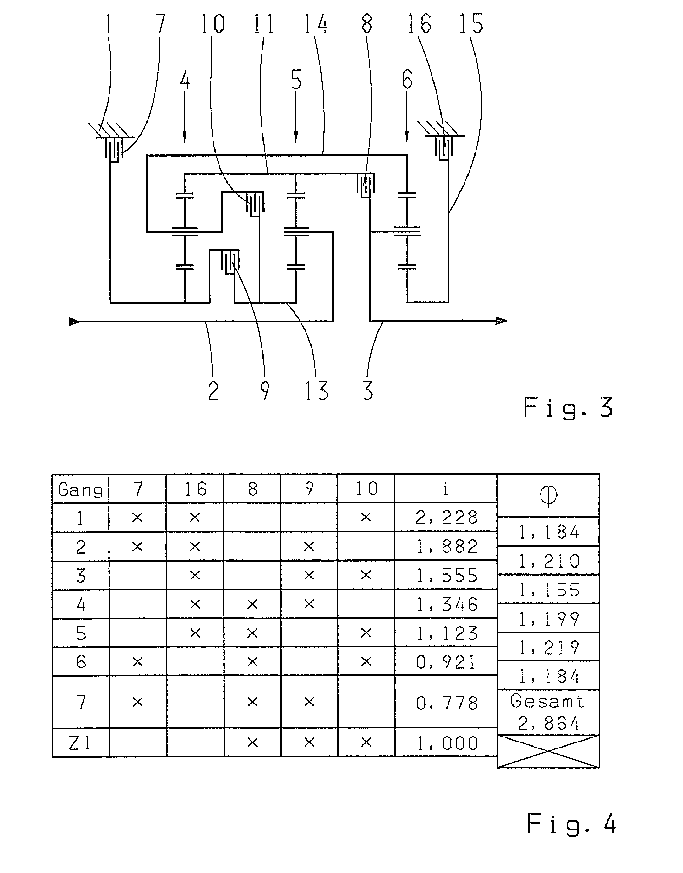

In Fig. 3 ist eine schematische Ansicht einer zweiten bevorzugten Ausführungsform eines erfindungsgemäßen Mehrstufengetriebes dargestellt. Im Unterschied zu der im Vorfeld beschriebenen Variante kommen hierbei jedoch insgesamt fünf Schaltelemente und insgesamt sieben drehbare Wellen zur Anwendung, wobei dabei ein Sonnenrad des dritten Planetensatzes 6 mit einer siebten Welle 15 verbunden ist, die mittels einer zweiten Bremse 16 am Gehäuse 1 festgesetzt werden kann.

In Fig. 4 ist ein beispielhaftes Schaltschema zu dem Mehrstufengetriebe gemäß Fig. 3 dargestellt, wobei auch hier wieder die jeweiligen Übersetzungen i in den einzelnen Gangstufen, sowie die sich ergebenden Gangsprüche ϕ zum jeweils nächsthöheren Gang beispielhaft und für die bereits vorstehend genannten bevorzugten Standübersetzungen der Planetensätze 4, 5 und 6 abzulesen sind. Eine Spreizung des Getriebes ist hierbei mit 2,864 angegeben.

Hierbei ergibt sich ein erstes Übersetzungsverhältnis durch Schließen der beiden Bremsen 7 und 16, sowie der dritten Kupplung 10. Ausgehend vom ersten Übersetzungsverhältnis ist zum Schalten in das nächste, zweite Übersetzungsverhältnis die dritte Kupplung 10 zu öffnen und die zweite Kupplung 9 zu betätigen, wobei zum weiteren Hochschalten in ein drittes Übersetzungsverhältnis die erste Bremse 7 zu lösen und die dritte Kupplung 10 wiederum zu schließen ist. Ein sich daran anschließendes, viertes Übersetzungsverhältnis wird durch ein erneutes Öffnen der dritten Kupplung 10 und ein Betätigen der ersten Kupplung 8 gewählt. Ein fünftes Übersetzungsverhältnis ergibt sich, indem ausgehend vom vierten Übersetzungsverhältnis die zweite Kupplung 9 geöffnet und die dritte Kupplung 10 betätigt wird, während zum weiteren Hochschalten in ein sechstes Übersetzungsverhältnis die zweite Bremse 16 zu lösen und die erste Bremse 7 zu schließen ist. Schließlich ergibt sich ein siebtes Übersetzungsverhältnis, indem ausgehend vom sechsten Übersetzungsverhältnis die dritte Kupplung 10 geöffnet und die zweite Kupplung 9 geschlossen wird.

Bei dem erfindungsgemäßen Mehrstufengetriebe gemäß Fig. 3 ist zudem die Darstellung eines zusätzlichen Übersetzungsverhältnisses möglich, welches in dem beispielhaften Schaltschema nach Fig. 4 mit Z1 bezeichnet ist. Dieses wird geschaltet, indem die Kupplungen 8, 9 und 10 geschlossen werden. Allerdings ist dieses zusätzliche Übersetzungsverhältnis nur optional vorzusehen, da der zusätzliche Gang zu nicht mehr geometrischen Stufensprüngen zwischen den Übersetzungsverhältnissen führt.

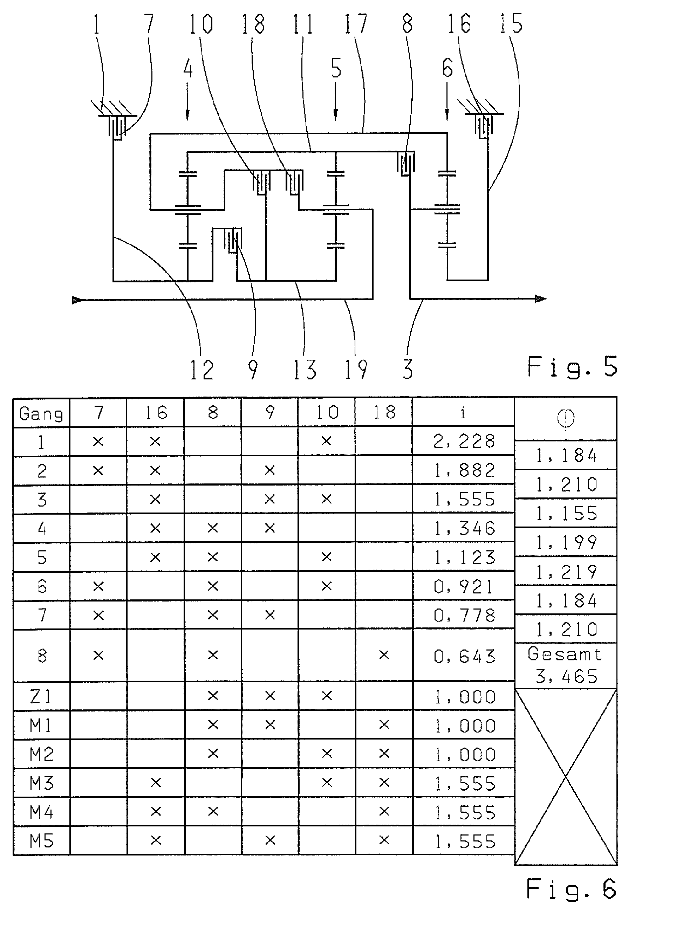

In Fig. 5 ist eine dritte bevorzugte Ausführungsform eines erfindungsgemäßen Mehrstufengetriebes dargestellt. Im Unterschied zu der Ausführungsform nach Fig. 1 kommen hierbei insgesamt sechs Schaltelemente, sowie sieben drehbare Wellen zur Anwendung. Dabei ist ein Sonnenrad des dritten Planetensatzes 6 erneut mit einer siebten Welle 15 verbunden, welche über eine zweite Bremse 16 am Gehäuse 1 festsetzbar ist. Zudem ist eine sechste Welle 17 vorgesehen, welche neben einer Verbindung mit einem Steg des ersten Planetensatzes 4 und einem Hohlrad des dritten Planetensatzes 6, sowie einer möglichen Ankoppelung über die dritte Kupplung 10 an die fünfte Welle 13 zusätzlich mittels einer vierten Kupplung 18 mit einer Antriebswelle 19 lösbar verbindbar ist.

In Fig. 6 ist ein beispielhaftes Schaltschema zu dem Mehrstufengetriebe nach Fig. 5 dargestellt, aus welchem erneut die jeweiligen Übersetzungen i in den einzelnen Gangstufen, sowie die sich ergebenden Gangsprünge ϕ zum jeweils benachbarten Gang beispielhaft entnehmbar sind. Die Standübersetzungen der Planetenstufen 4, 5 und 6 entsprechen wiederum den bevorzugten Standübersetzungen der Ausführungsform nach Fig. 1. Eine Spreizung des Mehrstufengetriebes gemäß Fig. 5 ist mit 3,465 angegeben.

Wie aus Fig. 6 ersichtlich ist, ergibt sich ein erstes Übersetzungsverhältnis durch Schließen der beiden Bremsen 7 und 16, sowie der dritten Kupplung 10. Zum Schalten in ein zweites Übersetzungsverhältnis ist die dritte Kupplung 10 zu öffnen und die zweite Kupplung 9 zu schließen, wobei ausgehend hiervon ein drittes Übersetzungsverhältnis durch Öffnen der ersten Bremse 7 und Betätigen der dritten Kupplung 10 wählbar ist. Im Falle des dritten Übersetzungsverhältnisses sind drei weitere Schaltungsmöglichkeiten denkbar, welche in dem Schaltschema in Fig. 6 mit M3 bis M5 bezeichnet sind. Wie zu erkennen ist, lässt sich das dritte Übersetzungsverhältnis auch durch Schließen der zweiten Bremse 16, sowie der dritten Kupplung 10 und der vierten Kupplung 18 oder Betätigen der zweiten Bremse 16 und der ersten Kupplung 8, sowie der vierten Kupplung 18 oder durch Schließen der zweiten Bremse 16 und der zweiten Kupplung 9, sowie der vierten Kupplung 18 darstellen.

Ferner ergibt sich ein viertes Übersetzungsverhältnis durch Betätigen der zweiten Bremse 16, sowie der ersten Kupplung 8 und der zweiten Kupplung 9. Ausgehend vom vierten Übersetzungsverhältnis ist ein fünftes Übersetzungsverhältnis wählbar, indem die zweite Kupplung 9 geöffnet und die dritte Kupplung 10 betätigt wird. Zum weiteren Schalten in ein sechstes Übersetzungsverhältnis ist dann die zweite Bremse 16 zu lösen und die erste Bremse 7 zu schließen. Ein daran anschließendes siebtes Übersetzungsverhältnis wird ausgehend vom sechsten Übersetzungsverhältnis durch ein erneutes Öffnen der dritten Kupplung 10 und ein Schließen der zweiten Kupplung 9 geschaltet. Schließlich ergibt sich ein achtes Übersetzungsverhältnis, indem die erste Bremse 7, sowie die erste Kupplung 8 und die vierte Kupplung 18 betätigt werden.

Auch im Falle des Mehrstufengetriebes gemäß Fig. 5 ist ein zusätzliches, in Fig. 6 mit Z1 bezeichnetes Übersetzungsverhältnis darstellbar, welches durch Betätigen der ersten Kupplung 8, der zweiten Kupplung 9 und der dritten Kupplung 10 schaltbar ist. Alternativ hierzu kann dieses zusätzliche Übersetzungsverhältnis auch durch Schließen der ersten Kupplung 8, der zweiten Kupplung 9 und der vierten Kupplung 18 oder durch Betätigen der ersten Kupplung 8, der dritten Kupplung 10 und der vierten Kupplung 18 gewählt werden, wie dargestellt durch die mit M1 und M2 bezeichneten Gänge in Fig. 6.

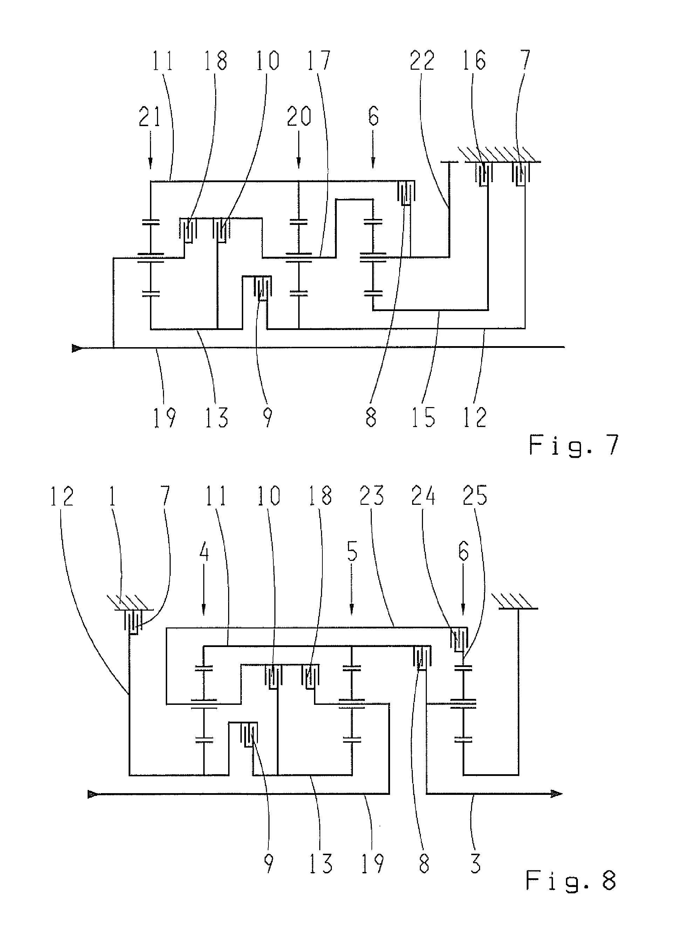

Aus Fig. 7 geht eine vierte bevorzugte Ausführungsform eines erfindungsgemäßen Mehrstufengetriebes hervor. Im Unterschied zu dem Mehrstufengetriebe nach Fig. 5 ist ein erster Planetensatz 20 hierbei zwischen einem zweiten Planetensatz 21 und dem dritten Planetensatz 6 platziert, wobei Verbindungen der Planetensätze 6, 20 und 21 untereinander wie bei der Ausführungsform nach Fig. 5 erhalten bleibt. Lediglich ein Abtrieb über eine Abtriebswelle 22 verläuft quer zu dem Antrieb über die Antriebswelle 19. Dabei ist ein Vorteil dieser Anordnungsvariante, dass im Vergleich zum Mehrstufengetriebe nach Fig. 5 nur noch ein längerer Topf vorhanden ist, so dass ein kompakterer Aufbau erzielt wird. Ein Schaltschema des Mehrstufengetriebes in Fig. 7 entspricht dabei dem Schaltschema nach Fig. 6.

Des Weiteren ist in Fig. 8 eine fünfte bevorzugte Ausführungsform eines Mehrstufengetriebes dargestellt. Im Unterschied zu der Ausführungsform nach Fig. 5 kann eine sechste Welle 23 mittels einer fünften Kupplung 24 mit einer siebten Welle 25 verbunden werden, welche mit einem Hohlrad des dritten Planetensatzes 6 gekoppelt ist. Ferner ist ein Sonnenrad des dritten Planetensatzes 6 drehfest mit dem Gehäuse 1 verbunden.

Dabei ist der Aufbau gemäß der Ausführungsform nach Fig. 8 wirkungsgleich zu der Ausführungsform gemäß Fig. 5, so dass in den einzelnen Übersetzungsverhältnissen und für die gleichen Standübersetzungen der Planetensätze 4, 5 und 6 die Übersetzungen i sowie die Gangsprünge ϕ gemäß dem beispielhaften Schaltschema nach Fig. 6 erreicht werden. Auch die Schaltung der einzelnen Übersetzungsverhältnisse unterscheidet sich zu der Beschreibung zu Fig. 6 nur dahingehend, dass anstelle der zweiten Bremse 16 in Fig. 5 jeweils die fünfte Kupplung 24 in Fig. 8 zu betätigen ist.

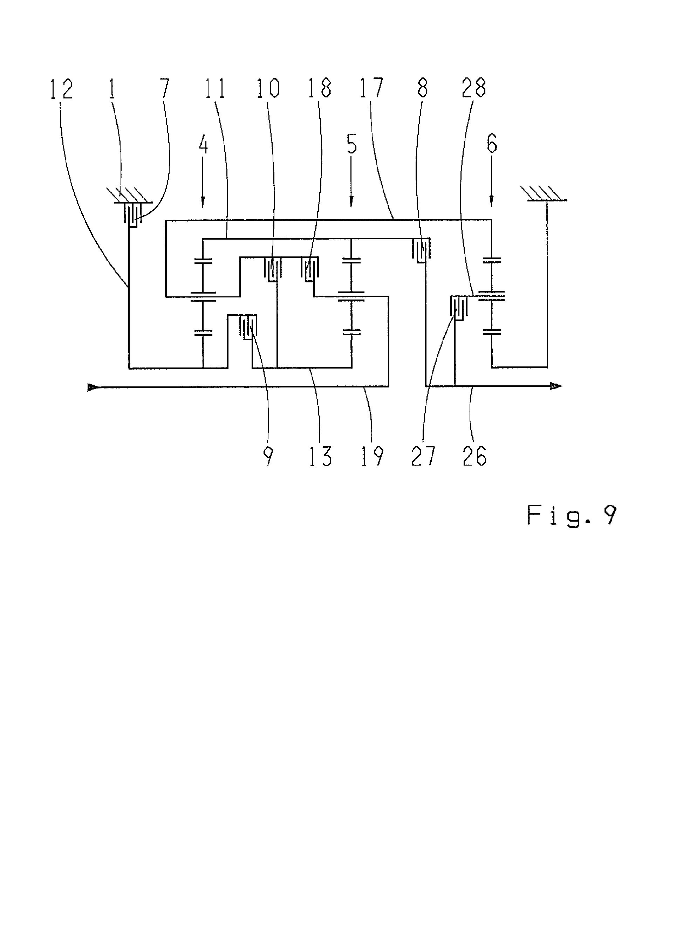

Schließlich geht aus Fig. 9 eine sechste bevorzugte Ausführungsform eines erfindungsgemäßen Mehrstufengetriebes hervor. Im Unterschied zu der Ausführungsform nach Fig. 5 ist eine Abtriebswelle 26 neben einer möglichen Ankoppelung an die dritte Welle 11 über die erste Kupplung 8 mittels einer fünften Kupplung 27 mit einer siebten Welle 28 lösbar verbindbar, die mit einem Steg des dritten Planetensatzes 6 in Verbindung steht. Zudem ist ein Sonnenrad des dritten Planetensatzes 6 drehfest mit dem Gehäuse 1 verbunden.

Auch im Falle der sechsten Ausführungsform des erfindungsgemäßen Mehrstufengetriebes nach Fig. 9 werden für gleiche Standübersetzungen wiederum die Übersetzungen i in den einzelnen Übersetzungsverhältnissen, sowie die Gangsprünge ϕ gemäß dem beispielhaften Schaltschema nach Fig. 6 erreicht. Hinsichtlich des Schaltens der einzelnen Übersetzungsverhältnisse unterscheidet sich die vorliegende Variante gegenüber dem Beschriebenen zu Fig. 6 dahingehend, dass anstelle der zweiten Bremse 16 in Fig. 5 jeweils die fünfte Kupplung 27 in Fig. 9 zu betätigen ist.

Mittels der einzelnen erfindungsgemäßen Ausgestaltungen eines Mehrstufengetriebes lässt sich ein Splittergetriebe für ein Gesamtgetriebe eines Arbeitsfahrzeuges mit einem niedrigen Herstellungsaufwand und geringem Gewicht erzielen. Zudem treten bei den erfindungsgemäßen Mehrstufengetrieben jeweils niedrige Absolut- und Relativdrehzahlen, sowie niedrige Planetensatz- und Schaltelementmomente auf. Schließlich werden jeweils eine gute Übersetzungsreihe und gute Verzahnungswirkungsgrade bei gleichzeitig nahezu geometrischen Stufensprüngen erzielt.

Dabei sind die erfindungsgemäßen Mehrstufengetriebe bevorzugt koaxial aufgebaut, der Abtrieb kann aber auch, wie im Falle der Ausführung gemäß Fig. 7, seitlich zum Getriebe (achsparallel) realisiert werden.

Erfindungsgemäß ist es zudem möglich, an jeder geeigneten Stelle des Mehrstufengetriebes zusätzliche Freiläufe vorzusehen, beispielsweise zwischen einer Welle und dem Gehäuse, oder um zwei Wellen gegebenenfalls zu verbinden. Des Weiteren können der Abtrieb prinzipiell überall an der jeweiligen Abtriebswelle und der Antrieb prinzipiell auch überall an der jeweiligen Antriebswelle angeordnet sein.

Im Rahmen einer vorteilhaften Weiterbildung kann die jeweilige Antriebswelle durch ein Kupplungselement von einem Antriebsmotor nach Bedarf getrennt werden, wobei als Kupplungselement ein hydrodynamischer Drehmomentwandler, eine hydrodynamische Kupplung, eine trockene Anfahrkupplung, eine nasse Anfahrkupplung, eine Magnetpulverkupplung, eine Fliehkraftkupplung, etc. einsetzbar sind. Zudem ist es auch möglich, ein derartiges Anfahrelement in Kraftflussrichtung hinter dem Getriebe anzuordnen, wobei in diesem Fall die jeweilige Antriebswelle ständig mit der Kurbelwelle des Antriebsmotors verbunden ist. Alternativ kann auch eines der Schaltelemente des Mehrstufengetriebes als internes Anfahrelement genutzt werden. Dieses interne Anfahrelement sollte in den potentiellen Anfahrgängen vorzugsweise geschlossen sein, d. h. es wird während des Anfahrvorgangs geschlossen.

Zudem ist es möglich zwischen dem Antriebsmotor und dem Getriebe einen Torsionsschwingungsdämpfer anzuordnen.

Schließlich ist es im Rahmen der Erfindung ebenso denkbar, auf jeder der Wellen, bevorzugt auf der jeweiligen Antriebswelle oder der jeweiligen Abtriebswelle eine elektrische Maschine als Generator und/oder als zusätzliche Antriebsmaschine anzuordnen. Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildung nicht explizit in den Figuren oder in der Beschreibung dargestellt ist.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: erste Bremse
- 8: erste Kupplung
- 9: zweite Kupplung
- 10: dritte Kupplung
- 11: dritte Welle
- 12: vierte Welle
- 13: fünfte Welle
- 14: sechste Welle
- 15: siebte Welle
- 16: zweite Bremse
- 17: sechste Welle
- 18: vierte Kupplung
- 19: Antriebswelle
- 20: erster Planetensatz
- 21: zweiter Planetensatz
- 22: Abtriebswelle
- 23: sechste Welle
- 24: fünfte Kupplung
- 25: siebte Welle
- 26: Abtriebswelle
- 27: fünfte Kupplung
- 28: siebte Welle

## Patentansprüche

1. Mehrstufengetriebe in Planetenbauweise, insbesondere Splittergetriebe einer Arbeitsmaschine, mit einem Gehäuse (1), in welchem drei Planetensätze (4, 5, 6; 20, 21, 6) und mehrere Wellen aufgenommen sind, und mit Schaltelementen, welche durch zumindest eine Bremse (7; 7, 16) und Kupplungen (8, 9, 10; 8, 9, 10, 18; 8, 9, 10, 18, 24; 8, 9, 10, 18, 27) gebildet sind und mittels deren gezielter Betätigung verschiedene Übersetzungsverhältnisse zwischen einer Antriebs- (2; 19) und einer Abtriebswelle (3; 22; 26) darstellbar sind, wobei eine dritte Welle (11) ein Hohlrad eines ersten Planetensatzes (4; 20) mit einem Hohlrad eines zweiten Planetensatzes (5; 21) verbindet und über eine erste Kupplung (8) mit der Abtriebswelle (3; 22; 26) lösbar koppelbar ist, wobei eine vierte Welle (12) mit einem Sonnenrad des ersten Planetensatzes (4; 20) gekoppelt und zum einen mittels einer ersten Bremse (7) am Gehäuse (1) festsetzbar ist, **dadurch gekennzeichnet, dass** die vierte Welle weiterhin über eine zweite Kupplung (9) mit einer fünften Welle (13) verbindbar ist, wobei ferner diese fünfte Welle (13) mit einem Sonnenrad des zweiten Planetensatzes (5; 21) verbunden und mittels einer dritten Kupplung (10) mit einer sechsten Welle (14; 17; 23) koppelbar ist, welche mit einem Steg des ersten Planetensatzes (4; 20) in Verbindung steht, und wobei die Antriebswelle (2; 19) mit einem Steg des zweiten Planetensatzes (5; 21) verbunden ist.

2. Mehrstufengetriebe nach Anspruch 1, **dadurch gekennzeichnet, dass** die sechste Welle (14) zudem mit einem Hohlrad eines dritten Planetensatzes (6) verbunden und ein Sonnenrad des dritten Planetensatzes (6) drehfest mit dem Gehäuse (1) gekoppelt ist, wobei ferner die Abtriebswelle (3) mit einem Steg des dritten Planetensatzes (6) in Verbindung steht.

3. Mehrstufengetriebe nach Anspruch 2, **dadurch gekennzeichnet, dass** sich ein erstes Übersetzungsverhältnis durch Schließen der ersten Bremse (7) und der dritten Kupplung (10), ein zweites Übersetzungsverhältnis durch Betätigen der ersten Bremse (7) und der zweiten Kupplung (9), ein drittes Übersetzungsverhältnis durch Schließen der zweiten (9) und dritten Kupplung (10), ein viertes Übersetzungsverhältnis durch Betätigen der ersten (8) und zweiten Kupplung (9), und ein fünftes Übersetzungsverhältnis durch Schließen der ersten (8) und dritten Kupplung (10) ergibt.

4. Mehrstufengetriebe nach Anspruch 1, **dadurch gekennzeichnet, dass** ein Hohlrad eines dritten Planetensatzes (6) mit der sechsten Welle (14) und ein Sonnenrad des dritten Planetensatzes (6) mit einer siebten Welle (15) verbunden ist, die mittels einer zweiten Bremse (16) am Gehäuse (1) festsetzbar ist, wobei ferner die Abtriebswelle (3) mit einem Steg des dritten Planetensatzes (6) in Verbindung steht.

5. Mehrstufengetriebe nach Anspruch 4, **dadurch gekennzeichnet, dass** sich ein erstes Übersetzungsverhältnis durch Schließen beider Bremsen (7, 16), sowie der dritten Kupplung (10), ein zweites Übersetzungsverhältnis durch Betätigen beider Bremsen (7, 16), sowie der zweiten Kupplung (9), ein drittes Übersetzungsverhältnis durch Schließen der zweiten Bremse (16), sowie der zweiten (9) und dritten Kupplung (10), ein viertes Übersetzungsverhältnis durch Betätigen der zweiten Bremse (16), sowie der ersten (8) und zweiten Kupplung (9), ein fünftes Übersetzungsverhältnis durch Schließen der zweiten Bremse (16), sowie der ersten (8) und dritten Kupplung (10), ein sechstes Übersetzungsverhältnis durch Betätigen der ersten Bremse (7), sowie der ersten (8) und dritten Kupplung (10), und ein siebtes Übersetzungsverhältnis durch Schließen der ersten Bremse (7), sowie der ersten (8) und zweiten Kupplung (9) ergibt.

6. Mehrstufengetriebe nach Anspruch 5, **dadurch gekennzeichnet, dass** sich ein zusätzliches Übersetzungsverhältnis durch Schließen der ersten (8), zweiten (9) und dritten Kupplung (10) ergibt.

7. Mehrstufengetriebe nach Anspruch 1, **dadurch gekennzeichnet, dass** die sechste Welle (17) zudem mit einem Hohlrad eines dritten Planetensatzes (6) verbunden und über eine vierte Kupplung (18) mit der Antriebswelle (19) koppelbar ist, wobei eine siebte Welle (15) mit einem Sonnenrad des dritten Planetensatzes (6) verbunden und mittels einer zweiten Bremse (16) am Gehäuse (1) festsetzbar ist, wobei ferner die Abtriebswelle (3) mit einem Steg des dritten Planetensatzes (6) in Verbindung steht.

8. Mehrstufengetriebe nach Anspruch 7, **dadurch gekennzeichnet, dass** der erste Planetensatz (20) in axialer Richtung zwischen dem zweiten (21) und dem dritten Planetensatzes (6) platziert ist.

9. Mehrstufengetriebe nach Anspruch 7 oder 8, **dadurch gekennzeichnet, dass** sich ein erstes Übersetzungsverhältnis durch Schließen beider Bremsen (7, 16), sowie der dritten Kupplung (10), ein zweites Übersetzungsverhältnis durch Betätigen beider Bremsen (7, 16), sowie der zweiten Kupplung (9), ein drittes Übersetzungsverhältnis durch Schließen der zweiten Bremse (16), sowie der zweiten (9) und dritten Kupplung (10) oder durch Betätigen der zweiten Bremse (16), sowie der dritten (10) und vierten Kupplung (18) oder durch Schließen der zweiten Bremse (16), sowie der ersten (8) und vierten Kupplung (18) oder durch Betätigen der zweiten Bremse (16), sowie der zweiten (9) und vierten Kupplung (18), ein viertes Übersetzungsverhältnis durch Schließen der zweiten Bremse (16), sowie der ersten (8) und zweiten Kupplung (9), ein fünftes Übersetzungsverhältnis durch Betätigen der zweiten Bremse (16), sowie der ersten (8) und dritten Kupplung (10), ein sechste Übersetzungsverhältnis durch Schließen der ersten Bremse (7), sowie der ersten (8) und dritten Kupplung (10), ein siebtes Übersetzungsverhältnis durch Betätigen der ersten Bremse (7), sowie der ersten (8) und zweiten Kupplung (9), und ein achtes Übersetzungsverhältnis durch Schließen der ersten Bremse (7), sowie der ersten (8) und vierten Kupplung (18) ergibt.

10. Mehrstufengetriebe nach Anspruch 1, **dadurch gekennzeichnet, dass** die sechste Welle (23) zum einen mittels einer vierten Kupplung (18) mit der Antriebswelle (19) und zum anderen über eine fünfte Kupplung (24) mit einer siebten Welle (25) lösbar verbindbar ist, welche mit einem Hohlrad eines dritten Planetensatzes (6) gekoppelt ist, wobei ein Sonnenrad des dritten Planetensatzes (6) drehfest mit dem Gehäuse (1) und ein Steg des dritten Planetensatzes (6) mit der Abtriebswelle (3) verbunden ist.

11. Mehrstufengetriebe nach Anspruch 1, **dadurch gekennzeichnet, dass** die sechste Welle (17) zudem mit einem Hohlrad eines dritten Planetensatzes (6) verbunden und über eine vierte Kupplung (18) mit der Antriebswelle (19) lösbar koppelbar ist, wobei ein Sonnenrad des dritten Planetensatzes (6) drehfest mit dem Gehäuse (1) und ein Steg des dritten Planetensatzes (6) mit einer siebten Welle (28) verbunden ist, die mittels einer fünften Kupplung (27) mit der Abtriebswelle (26) koppelbar ist.

12. Mehrstufengetriebe nach Anspruch 10 oder 11, **dadurch gekennzeichnet, dass** sich ein erstes Übersetzungsverhältnis durch Schließen der ersten Bremse (7), sowie der dritten (10) und fünften Kupplung (24; 27), ein zweites Übersetzungsverhältnis durch Betätigen der ersten Bremse (7), sowie der zweiten (9) und fünften Kupplung (24; 27), ein drittes Übersetzungsverhältnis durch Schließen der zweiten (9), dritten (10) und fünften Kupplung (24; 27) oder durch Betätigen der dritten (10), vierten (18) und fünften Kupplung (24; 27) oder durch Schließen der ersten (8), vierten (18) und fünften Kupplung (24; 27) oder durch Betätigen der zweiten (9), vierten (18) und fünften Kupplung (24; 27), ein viertes Übersetzungsverhältnis durch Schließen der ersten (8), zweiten (9) und fünften Kupplung (24; 27), ein fünftes Übersetzungsverhältnis durch Betätigen der ersten (8), dritten (10) und fünften Kupplung (24; 27), ein sechstes Übersetzungsverhältnis durch Schließen der ersten Bremse (7), sowie der ersten (8) und dritten Kupplung (10), ein siebtes Übersetzungsverhältnis durch Betätigen der ersten Bremse (7), sowie der ersten (8) und zweiten Kupplung (9), und ein achtes Übersetzungsverhältnis durch Schließen der ersten Bremse (7), sowie der ersten (8) und vierten Kupplung (18) ergibt.

13. Mehrstufengetriebe nach Anspruch 9 oder 12, **dadurch gekennzeichnet, dass** sich ein zusätzliches Übersetzungsverhältnis durch Schließen der ersten (8), zweiten (9) und dritten Kupplung (10) oder durch Betätigen der ersten (8), zweiten (9) und vierten Kupplung (18) oder durch Schließen der ersten (8), dritten (10) und vierten Kupplung (18) ergibt.

14. Mehrstufengetriebe nach einem der vorhergehenden Ansprüche, **dadurch gekennzeichnet, dass** die Abtriebswelle (3; 22; 26) als Antrieb und die Antriebswelle (2; 19) als Abtrieb des Mehrstufengetriebes dient.

## Claims

1. Multi-stage gearbox of planetary design, in particular splitter gearbox of a mobile machine, having a housing (1), in which three planetary sets (4, 5, 6; 20, 21, 6) and a plurality of shafts are accommodated, and having shifting elements which are formed by at least one brake (7; 7, 16) and clutches (8, 9, 10; 8, 9, 10, 18; 8, 9, 10, 18, 24; 8, 9, 10, 18, 27) and by means of the targeted actuation of which different transmission ratios can be produced between a drive shaft (2; 19) and an output shaft (3; 22; 26), a third shaft (11) connecting an internal gear of a first planetary set (4; 20) to an internal gear of a second planetary set (5; 21) and being capable of being coupled releasably via a first clutch (8) to the output shaft (3; 22; 26), a fourth shaft (12) being coupled to a sun gear of the first planetary set (4; 20) and firstly being capable of being fixed by means of a first brake (7) on the housing (1), **characterized in that**, furthermore, the fourth shaft can be connected via a second clutch (9) to a fifth shaft (13), the said fifth shaft (13), furthermore, being connected to a sun gear of the second planetary set (5; 21) and being capable of being coupled by means of a third clutch (10) to a sixth shaft (14; 17; 23) which is connected to a spider of the first planetary set (4; 20), and the drive shaft (2; 19) being connected to a spider of the second planetary set (5; 21).

2. Multi-stage gearbox according to Claim 1, **characterized in that** the sixth shaft (14) is additionally connected to an internal gear of a third planetary set (6), and a sun gear of the third planetary set (6) is coupled fixedly to the housing (1) so as to rotate with it, the output shaft (3) being connected, furthermore, to a spider of the third planetary set (6).

3. Multi-stage gearbox according to Claim 2, **characterized in that** a first transmission ratio results from closure of the first brake (7) and the third clutch (10), a second transmission ratio results from actuation of the first brake (7) and the second clutch (9), a third transmission ratio results from closure of the second (9) and third clutch (10), a fourth transmission ratio results from actuation of the first (8) and second clutch (9), and a fifth transmission ratio results from closure of the first (8) and third clutch (10).

4. Multi-stage gearbox according to Claim 1, **characterized in that** an internal gear of a third planetary set (6) is connected to the sixth shaft (14) and a sun gear of the third planetary set (6) is connected to a seventh shaft (15) which can be fixed by means of a second brake (16) on the housing (1), the output shaft (3) being connected, furthermore, to a spider of the third planetary set (6).

5. Multi-stage gearbox according to Claim 4, **characterized in that** a first transmission ratio results from closure of both brakes (7, 16) and of the third clutch (10), a second transmission ratio results from actuation of both brakes (7, 16) and of the second clutch (9), a third transmission ratio results from closure of the second brake (16) and of the second (9) and third clutch (10), a fourth transmission ratio results from actuation of the second brake (16) and of the first (8) and second clutch (9), a fifth transmission ratio results from closure of the second brake (16) and of the first (8) and third clutch (10), a sixth transmission ratio results from actuation of the first brake (7) and of the first (8) and third clutch (10), and a seventh transmission ratio results from closure of the first brake (7) and of the first (8) and second clutch (9).

6. Multi-stage gearbox according to Claim 5, **characterized in that** an additional transmission ratio results from closure of the first (8), second (9) and third clutch (10).

7. Multi-stage gearbox according to Claim 1, **characterized in that** the sixth shaft (17) is additionally connected to an internal gear of a third planetary set (6) and can be coupled via a fourth clutch (18) to the drive shaft (19), a seventh shaft (15) being connected to a sun gear of the third planetary set (6) and being capable of being fixed by means of a second brake (16) on the housing (1), the output shaft (3) being connected, furthermore, to a spider of the third planetary set (6).

8. Multi-stage gearbox according to Claim 7, **characterized in that** the first planetary set (20) is placed in the axial direction between the second (21) and the third planetary set (6).

9. Multi-stage gearbox according to Claim 7 or 8, **characterized in that** a first transmission ratio results from closure of both brakes (7, 16) and of the third clutch (10), a second transmission ratio results from actuation of both brakes (7, 16) and of the second clutch (9), a third transmission ratio results from closure of the second brake (16) and of the second (9) and third clutch (10) or from actuation of the second brake (16) and of the third (10) and fourth clutch (18) or from closure of the second brake (16) and of the first (8) and fourth clutch (18) or from actuation of the second brake (16) and of the second (9) and fourth clutch (18), a fourth transmission ratio results from closure of the second brake (16) and of the first (8) and second clutch (9), a fifth transmission ratio results from actuation of the second brake (16) and of the first (8) and third clutch (10), a sixth transmission ratio results from closure of the first brake (7) and of the first (8) and third clutch (10), a seventh transmission ratio results from actuation of the first brake (7) and of the first (8) and second clutch (9), and an eighth transmission ratio results from closure of the first brake (7) and of the first (8) and fourth clutch (18).

10. Multi-stage gearbox according to Claim 1, **characterized in that** the sixth shaft (23) can be connected releasably firstly by means of a fourth clutch (18) to the drive shaft (19) and secondly via a fifth clutch (24) to a seventh shaft (25) which is coupled to an internal gear of a third planetary set (6), a sun gear of the third planetary set (6) being connected fixedly to the housing (1) so as to rotate with it, and a spider of the third planetary set (6) being connected to the output shaft (3).

11. Multi-stage gearbox according to Claim 1, **characterized in that** the sixth shaft (17) is additionally connected to an internal gear of a third planetary set (6) and can be coupled releasably via a fourth clutch (18) to the drive shaft (19), a sun gear of the third planetary set (6) being connected fixedly to the housing (1) so as to rotate with it, and a spider of the third planetary set (6) being connected to a seventh shaft (28) which can be coupled by means of a fifth clutch (27) to the output shaft (26).

12. Multi-stage gearbox according to Claim 10 or 11, **characterized in that** a first transmission ratio results from closure of the first brake (7) and of the third (10) and fifth clutch (24; 27), a second transmission ratio results from actuation of the first brake (7) and of the second (9) and fifth clutch (24; 27), a third transmission ratio results from closure of the second (9), third (10) and fifth clutch (24; 27) or from actuation of the third (10), fourth (18) and fifth clutch (24; 27) or from closure of the first (8), fourth (18) and fifth clutch (24; 27) or from actuation of the second (9), fourth (18) and fifth clutch (24; 27), a fourth transmission ratio results from closure of the first (8), second (9) and fifth clutch (24; 27), a fifth transmission ratio results from actuation of the first (8), third (10) and fifth clutch (24; 27), a sixth transmission ratio results from closure of the first brake (7) and of the first (8) and third clutch (10), a seventh transmission ratio results from actuation of the first brake (7) and of the first (8) and second clutch (9), and an eighth transmission ratio results from closure of the first brake (7), and of the first (8) and fourth clutch (18).

13. Multi-stage gearbox according to Claim 9 or 12, **characterized in that** an additional transmission ratio results from closure of the first (8), second (9) and third clutch (10) or from actuation of the first (8), second (9) and fourth clutch (18) or from closure of the first (8), third (10) and fourth clutch (18).

14. Multi-stage gearbox according to one of the preceding claims, **characterized in that** the output shaft (3; 22; 26) serves as drive and the drive shaft (2; 19) serves as output of the multi-stage gearbox.

## Revendications

1. Boîte de vitesses multi-étagée de construction planétaire, en particulier boîte de vitesses à doubleur de gamme d'un engin de travail, comprenant un boîtier (1) dans lequel sont reçus trois trains planétaires (4, 5, 6 ; 20, 21, 6) et plusieurs arbres, et comprenant des éléments de changement de vitesses, lesquels sont formés par au moins un frein (7 ; 7, 16) et des embrayages (8, 9, 10 ; 8, 9, 10, 18 ; 8, 9, 10, 18, 24 ; 8, 9, 10, 18, 27) et au moyen de l'actionnement spécifique desquels différents rapports de démultiplication entre un arbre d'entraînement (2 ; 19) et un arbre de prise de force (3 ; 22 ; 26) peuvent être réalisés, un troisième arbre (11) reliant une couronne d'un premier train planétaire (4 ; 20) à une couronne d'un deuxième train planétaire (5 ; 21) et pouvant être accouplé de manière amovible à l'arbre de prise de force (3 ; 22 ; 26) par le biais d'un premier embrayage (8), un quatrième arbre (12) étant accouplé à une roue solaire du premier train planétaire (4 ; 20) et pouvant être fixé au boîtier (1) d'une part au moyen d'un premier frein (7), **caractérisée en ce que** le quatrième arbre peut en outre être relié à un cinquième arbre (13) par le biais d'un deuxième embrayage (9), ce cinquième arbre (13) étant en outre relié à une roue solaire du deuxième train planétaire (5 ; 21) et pouvant être accouplé à un sixième arbre (14 ; 17 ; 23) au moyen d'un troisième embrayage (10), lequel sixième arbre est en liaison avec un porte-satellites du premier train planétaire (4 ; 20), et l'arbre d'entraînement (2 ; 19) étant relié à un porte-satellites du deuxième train planétaire (5 ; 21).

2. Boîte de vitesses multi-étagée selon la revendication 1, **caractérisée en ce que** le sixième arbre (14) est par ailleurs relié à une couronne d'un troisième train planétaire (6) et une roue solaire du troisième train planétaire (6) est accouplée de manière solidaire en rotation au boîtier (1), l'arbre de prise de force (3) étant en outre en liaison avec un porte-satellites du troisième train planétaire (6).

3. Boîte de vitesses multi-étagée selon la revendication 2, **caractérisée en ce qu'**un premier rapport de démultiplication s'obtient par fermeture du premier frein (7) et du troisième embrayage (10), un deuxième rapport de démultiplication s'obtient par actionnement du premier frein (7) et du deuxième embrayage (9), un troisième rapport de démultiplication s'obtient par fermeture du deuxième (9) et du troisième embrayage (10), un quatrième rapport de démultiplication s'obtient par actionnement du premier (8) et du deuxième embrayage (9), et un cinquième rapport de démultiplication s'obtient par fermeture du premier (8) et du troisième embrayage (10).

4. Boîte de vitesses multi-étagée selon la revendication 1, **caractérisée en ce qu'**une couronne d'un troisième train planétaire (6) est reliée au sixième arbre (14) et une roue solaire du troisième train planétaire (6) est reliée à un septième arbre (15) qui peut être fixé au boîtier (1) au moyen d'un deuxième frein (16), l'arbre de prise de force (3) étant en outre en liaison avec un porte-satellites du troisième train planétaire (6).

5. Boîte de vitesses multi-étagée selon la revendication 4, **caractérisée en ce qu'**un premier rapport de démultiplication s'obtient par fermeture des deux freins (7, 16), ainsi que du troisième embrayage (10), un deuxième rapport de démultiplication s'obtient par actionnement des deux freins (7, 16), ainsi que du deuxième embrayage (9), un troisième rapport de démultiplication s'obtient par fermeture du deuxième frein (16), ainsi que du deuxième (9) et du troisième embrayage (10), un quatrième rapport de démultiplication s'obtient par actionnement du deuxième frein (16), ainsi que du premier (8) et du deuxième embrayage (9), un cinquième rapport de démultiplication s'obtient par fermeture du deuxième frein (16), ainsi que du premier (8) et du troisième embrayage (10), un sixième rapport de démultiplication s'obtient par actionnement du premier frein (7), ainsi que du premier (8) et du troisième embrayage (10), et un septième rapport de démultiplication s'obtient par fermeture du premier frein (7), ainsi que du premier (8) et du deuxième embrayage (9).

6. Boîte de vitesses multi-étagée selon la revendication 5, **caractérisée en ce qu'**un rapport de démultiplication supplémentaire s'obtient par fermeture du premier (8), du deuxième (9) et du troisième embrayage (10).

7. Boîte de vitesses multi-étagée selon la revendication 1, **caractérisée en ce que** le sixième arbre (17) est par ailleurs relié à une couronne d'un troisième train planétaire (6) et peut être accouplé à l'arbre d'entraînement (19) par le biais d'un quatrième embrayage (18), un septième arbre (15) étant relié à une roue solaire du troisième train planétaire (6) et pouvant être fixé au boîtier (1) au moyen d'un deuxième frein (16), l'arbre de prise de force (3) étant en outre en liaison avec un porte-satellites du troisième train planétaire (6).

8. Boîte de vitesses multi-étagée selon la revendication 7, **caractérisée en ce que** le premier train planétaire (20) est placé entre le deuxième (21) et le troisième train planétaire (6) dans la direction axiale.

9. Boîte de vitesses multi-étagée selon la revendication 7 ou 8, **caractérisée en ce qu'**un premier rapport de démultiplication s'obtient par fermeture des deux freins (7, 16), ainsi que du troisième embrayage (10), un deuxième rapport de démultiplication s'obtient par actionnement des deux freins (7, 16), ainsi que du deuxième embrayage (9), un troisième rapport de démultiplication s'obtient par fermeture du deuxième frein (16), ainsi que du deuxième (9) et du troisième embrayage (10), ou par actionnement du deuxième frein (16), ainsi que du troisième (10) et du quatrième embrayage (18), ou par fermeture du deuxième frein (16), ainsi que du premier (8) et du quatrième embrayage (18), ou par actionnement du deuxième frein (16), ainsi que du deuxième (9) et du quatrième embrayage (18), un quatrième rapport de démultiplication s'obtient par fermeture du deuxième frein (16), ainsi que du premier (8) et du deuxième embrayage (9), un cinquième rapport de démultiplication s'obtient par actionnement du deuxième frein (16), ainsi que du premier (8) et du troisième embrayage (10), un sixième rapport de démultiplication s'obtient par fermeture du premier frein (7), ainsi que du premier (8) et du troisième embrayage (10), un septième rapport de démultiplication s'obtient par actionnement du premier frein (7), ainsi que du premier (8) et du deuxième embrayage (9), et un huitième rapport de démultiplication s'obtient par fermeture du premier frein (7), ainsi que du premier (8) et du quatrième embrayage (18).

10. Boîte de vitesses multi-étagée selon la revendication 1, **caractérisée en ce que** le sixième arbre (23) peut être relié de manière amovible d'une part à l'arbre d'entraînement (19) au moyen d'un quatrième embrayage (18) et d'autre part à un septième arbre (25) par le biais d'un cinquième embrayage (24), lequel septième arbre est accouplé à une couronne d'un troisième train planétaire (6), une roue solaire du troisième train planétaire (6) étant reliée de manière solidaire en rotation au boîtier (1) et un porte-satellites du troisième train planétaire (6) étant relié à l'arbre de prise de force (3).

11. Boîte de vitesses multi-étagée selon la revendication 1, **caractérisée en ce que** le sixième arbre (17) est par ailleurs relié à une couronne d'un troisième train planétaire (6) et peut être accouplé de manière amovible à l'arbre d'entraînement (19) par le biais d'un quatrième embrayage (18), une roue solaire du troisième train planétaire (6) étant reliée de manière solidaire en rotation au boîtier (1) et un porte-satellites du troisième train planétaire (6) étant relié à un septième arbre (28) qui peut être accouplé à l'arbre de prise de force (26) au moyen d'un cinquième embrayage (27).

12. Boîte de vitesses multi-étagée selon la revendication 10 ou 11, **caractérisée en ce qu'**un premier rapport de démultiplication s'obtient par fermeture du premier frein (7), ainsi que du troisième (10) et du cinquième embrayage (24 ; 27), un deuxième rapport de démultiplication s'obtient par actionnement du premier frein (7), ainsi que du deuxième (9) et du cinquième embrayage (24 ; 27), un troisième rapport de démultiplication s'obtient par fermeture du deuxième (9), du troisième (10) et du cinquième embrayage (24 ; 27) ou par actionnement du troisième (10), du quatrième (18) et du cinquième embrayage (24 ; 27) ou par fermeture du premier (8), du quatrième (18) et du cinquième embrayage (24 ; 27) ou par actionnement du deuxième (9), du quatrième (18) et du cinquième embrayage (24 ; 27), un quatrième rapport de démultiplication s'obtient par fermeture du premier (8), du deuxième (9) et du cinquième embrayage (24 ; 27), un cinquième rapport de démultiplication s'obtient par actionnement du premier (8), du troisième (10) et du cinquième embrayage (24 ; 27), un sixième rapport de démultiplication s'obtient par fermeture du premier frein (7), ainsi que du premier (8) et du troisième embrayage (10), un septième rapport de démultiplication s'obtient par actionnement du premier frein (7), ainsi que du premier (8) et du deuxième embrayage (9), et un huitième rapport de démultiplication s'obtient par fermeture du premier frein (7), ainsi que du premier (8) et du quatrième embrayage (18).

13. Boîte de vitesses multi-étagée selon la revendication 9 ou 12, **caractérisée en ce qu'**un rapport de démultiplication supplémentaire s'obtient par fermeture du premier (8), du deuxième (9) et du troisième embrayage (10) ou par actionnement du premier (8), du deuxième (9) et du quatrième embrayage (18) ou par fermeture du premier (8), du troisième (10) et du quatrième embrayage (18).

14. Boîte de vitesses multi-étagée selon l'une quelconque des revendications précédentes, **caractérisée en ce que** l'arbre de prise de force (3 ; 22 ; 26) sert d'entraînement et l'arbre d'entraînement (2 ; 19) sert de prise de force de la boîte de vitesses multi-étagée.
